# EUROPEAN PATENT APPLICATION

(11) **EP 2 451 137 A1**
(43) Date of publication of application: **09.05.2012**
(21) Application number: 10306224.6
(22) Date of filing: 08.11.2010
(51) Int. Cl.: H04L 29/08, G06Q 30/00

(54) **A method for communicating information, corresponding server and system**

(71) Applicant: Gemalto SA, 92190 Meudon (FR)
(72) Inventor: Rhelimi, Alain, 13600, Ceyreste (FR)

(57) **Abstract**

The invention relates to a method (20) for communicating information.

According to the invention, a server (110) having a predetermined identifier, as server identifier, a communicating device (124) storing the server identifier, the communicating device being associated with an information transmitting medium (12),
- the information transmitting medium sends successively at least one predetermined information item;
- a terminal (14) receives from the communicating device the server identifier;
- the terminal sends, via a mobile radio-communication network, to the server, a message (26) comprising the server identifier;
- a mobile radio-communication network element (182) comprised within the mobile radio-communication network receives the message and allocates a receipt time to the message;
- the mobile radio-communication network element sends to the server a message (28) comprising the server identifier and the allocated receipt time;
- the server retrieves at least one predetermined information item linked to the information item sent at the receipt time; and
- the server sends to the terminal at least one message (210) comprising the retrieved information item.

The invention also relates to corresponding server and system.

## Description

### Field of the invention:

The invention relates, in a general manner, to a method for communicating information.

Moreover, the invention pertains to a server for communicating information.

Finally, the invention also relates to a system for communicating information.

### State of the art:

US 2002/0116268 describes a solution based upon a Radio Frequency IDentification (or RFID) tag that is attached to an advertisement and stores a Uniform Resource Locator (or URL) for addressing a thus identified (Web) server, so as to be provided by the server with further information relating to the advertisement.

Such a known solution has the advantage of providing a user of a mobile terminal with an access to an Internet home page of a corresponding server. The terminal user obtains thus information about the associated advertisement.

However, due to the fact that the RFID tag stores the URL, the mobile terminal has to be provided with a (Web) browser and be connected to the Internet network, so as to access the server.

There is a need for a user to access information relating to an advertisement without being connected to the Internet network.

### Summary of the invention:

The invention proposes a solution for satisfying the just hereinabove specified need by providing a method for communicating information.

According to the invention, a server having a predetermined identifier, as server identifier, a communicating device storing the server identifier, the communicating device being associated with an information transmitting medium, the method comprises the following steps. The information transmitting medium sends successively at least one predetermined information item. A terminal receives from the communicating device the server identifier. The terminal sends, via a mobile radio-communication network, to the server, a message comprising the server identifier. A mobile radio-communication network element comprised within the mobile radio-communication network receives the message and allocates a receipt time to the message. The mobile radio-communication network element sends to the server a message comprising the server identifier and the allocated receipt time. The server retrieves at least one predetermined information item linked to the information item sent at the receipt time. And the server sends to the terminal at least one message comprising the retrieved information item.

The principle of the invention consists in that an information transmitting medium transmits a sequence of one or several information items to a user. A terminal which connects to a communicating device that is associated with the information transmitting medium and that registers a server identifier, reads the server identifier. Then, the terminal connects, through a mobile radio-communication network, to the server identified by the server identifier while sending to the server a message with the server identifier. One entity of the mobile radio-communication network intercepts the sent message and dates a moment at which the entity receives the sent message and forwards it to the server while adding, within the forwarded message, the time of a reception of the sent message. The server gets, thanks to the dating of the corresponding message sent through the network, additional information. The server sends back to the terminal the get additional information through one or several messages.

The server that is addressed by the terminal is thus identified thanks to its identifier which may be notably a phone number and/or a Session Initiation Protocol (or SIP) address (and not notably through its URL in comparison to a known solution).

Contrary to the herein above described known solution, the invention server being accessed through its identifier, the invention user terminal does need neither to be equipped with any Web browser nor to be connected to the Internet network.

It is noteworthy that the server knows a time sequence of the information transmitted by the information transmitting medium, so as to provide the addresser, namely the user terminal, with additional information linked to the information transmitted by the information transmitting medium. To provide the user terminal with additional information, it is made possible thanks to a dating of the message sent from the terminal to the server. The dating is carried out by the mobile radio-communication network entity.

The concerned terminal user may be a consumer of the transmitted information through the information transmitting medium and the additional information transmitted through a Man Machine Interface (or MMI) incorporated within or connected to the terminal.

The consumer may benefit from the complete information, through at least one of the user senses, such as the eyesight, the hearing, the touch, the smell and/or the taste.

The invention solution makes it possible, thanks to a fixed server identifier, as static information, to provide a terminal user with dynamic information since a first part of the information is sent by the information transmitting medium while a second part of the information is sent by the corresponding server to the terminal. The second part of the information is timely coupled to or synchronized with the first part of the information.

It is to be noted that the first part of the information may change from one time to another time, rendering the thus sent first part of the information also dynamic by itself. The first part of the information supplied by the information transmitting medium is completed by the second part of the information that is supplied by the server and may be captured, through at least one of the senses, by the terminal user.

Advantageously, the message comprising the server identifier includes a Short Message Service (or SMS) type message and/or a Multimedia Message Service (or MMS) type message.

According to a further aspect, the invention is a server for communicating information.

According to the invention, at least one information item being sent successively by an information transmitting medium, the server having a predetermined phone identifier, as server identifier, the server is adapted to receive a message comprising the server identifier and a receipt time, retrieve at least one predetermined information item linked to the information item sent at the receipt time, and send at least one message comprising the retrieved information item.

According to a further aspect, the invention is a system for communicating information.

According to the invention, the system comprises a communicating device comprising means for storing a server identifier, the communicating device comprising means for being associated with an information transmitting medium, the information transmitting medium comprising means for sending successively at least one predetermined information item, a terminal, the terminal comprising means for receiving from the communicating device the server identifier, the terminal comprising means for sending, via a mobile radio-communication network, to the server, a message comprising the server identifier, a mobile radio-communication network element comprised within the mobile radio-communication network, the mobile radio-communication network element comprising means for receiving the message, means for allocating a receipt time to the message, and means for sending to the server a message comprising the server identifier and the allocated receipt time, a server having a predetermined identifier, as server identifier, the server comprising means for retrieving at least one predetermined information item linked to the information item sent at the receipt time and means for sending to the terminal at least one message comprising the retrieved information item.

As communicating device, it can be a contact-less communicating device, like an RFID tag, an infra-red transmitter, a Bluetooth 2D (acronym for two dimensions) bar codes and/or a printed bar code.

As information transmitting medium, it can be a scrolling paper, a TeleVision (or TV) set, an electronic display and/or a loudspeaker.

### Brief description of the drawings:

Additional features and advantages of the invention will be more clearly understandable after reading a detailed description of one preferred embodiment of the invention, given as an indicative and non-limitative example, in conjunction with the following drawings:

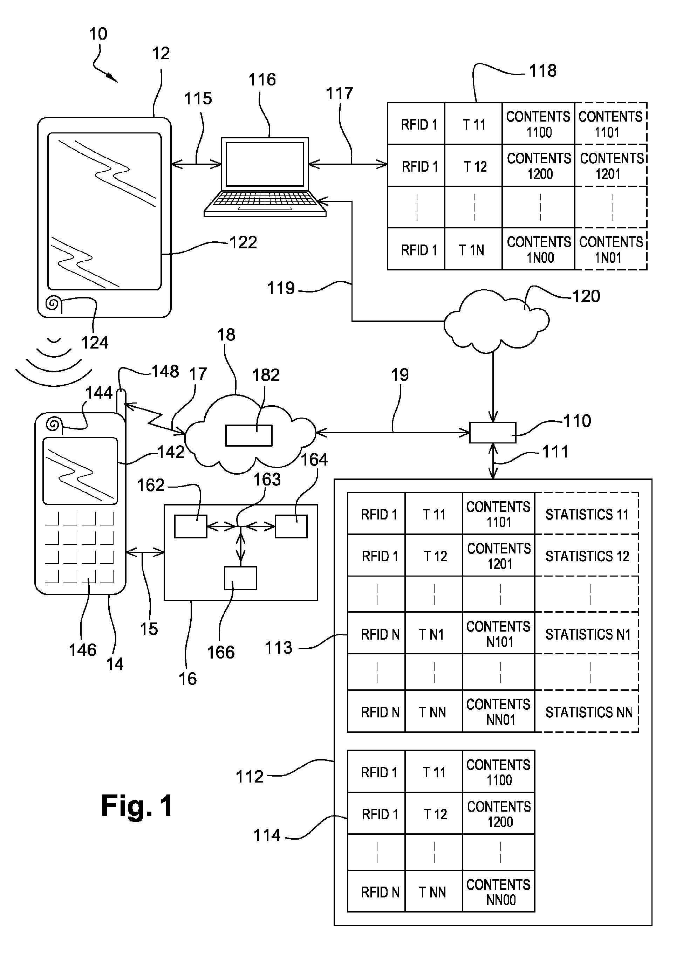

   - Figure 1 illustrates a simplified diagram of one embodiment of a system for communicating information comprising an electronic display, as an information transmitting medium, an RFID tag, as a communicating device, a mobile telephone, as a terminal, and a server, the system being adapted to provide information to the terminal that is synchronized with the information displayed by the electronic display at a time given by a SMS Center, as a mobile radio-communication network element, according to the invention; and

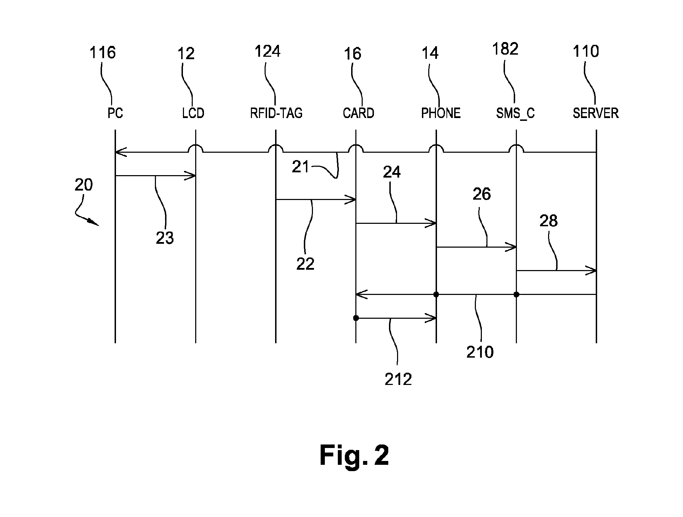

   - Figure 2 represents an example of a flow of messages exchanged notably between the RFID tag, the terminal, the SMS Center and the server of the system of figure 1, so as to provide a terminal user, on the one hand, with information sent through the electronic display and, on the other hand, at (almost) the same time with further information linked to the displayed information and supplied through the terminal.

### Detailed description:

A description of the invention that follows is made with a reference to the name of the entities or the messages defined by a mobile radio-communication network standard, such as a GSM (acronym for "Global System for Mobile communications"), a UMTS (acronym for "Universal Mobile Telecommunications System"), a CDMA (acronym for "Code Division Multiple Access"), and/or LTE (acronym for "Long Term Evolution") network(s).

Nevertheless, the present invention can be applied to, in particular, a satellite network(s), or any network having technical features relating to a radio-communication network having technical background close to the mobile radio-communication network(s).

Herein under is considered a case in which the invention method for communicating information is implemented by an electronic display, as an information transmitting medium, an RFID tag, as a communicating device, a Near Field Communication (or NFC) enabled mobile telephone, as a terminal, that cooperates with a token, and a server. The NFC enabled mobile telephone user is, thanks to the invention method, server and system, provided by the server with further information to be coupled with the contents displayed presently at the electronic display.

Naturally, the invention method for communicating information may be implemented by intermediary entities, as an information transmitting medium, as a communicating device and/or as a terminal that is(are) distinct from the ones of the embodiment that is described herein-below.

For example, according to another embodiment (not represented), instead of the electronic display, the information transmitting medium is constituted by a scrolling paper that changes dynamically the displayed paper, i.e. that displays one paper with an information item at one time and another paper with another information item at another time.

For example, according to another embodiment (not represented), instead of an NFC enabled mobile telephone cooperating with a token, the NFC enabled mobile telephone is a standalone entity, i.e. which does not cooperate with any token for being provided by the server with additional information to be coupled with the contents displayed currently at the electronic display. Such a standalone NFC enabled mobile telephone carries out, on the one hand, the functions that are carried out by the NFC enabled mobile telephone, and on the other hand, the ones carried out by the token that are further described infra.

Moreover, instead of being constituted by an NFC enabled mobile telephone, the terminal may be, for example, a Personal Computer (or PC), a laptop computer, a netbook, a tablet computer and/or a Personal Digital Assistant (or PDA).

Figure 1 shows one exemplary invention embodiment of an electronic system 10 for communicating information.

In the described embodiment, the system 10 for communicating information includes a Liquid Crystal Display (or LCD) 12, an RFID tag 124 associated with the LCD 12, an NFC enabled mobile telephone 14 in cooperation with a token 16, a Short Message Service Center (or SMS-C) 182 included within a mobile radio-communication network 18, and a remote server 110.

For a sake of simplicity and conciseness, the RFID tag 124, the NFC enabled mobile telephone 14 and the remote server 110 are termed hereinafter the tag 124, the phone 14 and the server 110 respectively, except when the corresponding replacing term may be confusing.

The system 10 for communicating information is adapted to provide a user equipped with the phone 14 with information relating to a contents that is being displayed by the LCD 12 and further information linked to the (almost currently) content information and displayed through a display 142 and/or sent through a loudspeaker (not represented), as a MMI controlled by the phone 14.

Only one LCD 12 is represented for simplicity reasons. However, the server 110 controls preferably a fleet of LCDs (preferably located at different geographical places or locations) that may display the same or different contents at the same time.

Likewise, only one phone 14 is represented for simplicity reasons. However, the server 110 may transmit to a fleet of phones additional information related to the content information experienced, through their corresponding LCD, by their respective phone user. The transmitted additional information is supplied to the respective phone, through the display and/or the loudspeaker of each phone, as the same or different contents at almost the same time.

Instead of the LCD 12, the information transmitting medium may be constituted by a computer with an integrated LCD TeleVision (or LCD TV).

The LCD 12, as an information transmitting medium, displays, through its display 122, a first contents 1100, during a corresponding first time period T11, and will display at least one other contents 1N00, where N is greater than or equal to 2, during a corresponding nth time period T1 N.

A represented first suffix related to one time period denoted T is related to an RFID tag identifier (or another identifier allowing to identify a location of the concerned displayed content data) that is denoted RFID I. A represented second suffix related to the time period T is related to an occurrence identifier denoted N. Thus, a resulting time period is denoted TIN that relates to the RFID tag identifier I, denoted RFID I, and an occurrence identifier denoted N. For example, the LCD 12 sequentially displays a first contents 1100, as starting contents, during a first time period T11, until a last contents 1N00, as ending contents, during a last time period T1N, as a predefined sequence of contents to be delivered through the LCD 12 or a predefined play list.

According to another example, the LCD 12 displays, in an endless manner, the predefined sequence of contents associated with their respective time periods. In other words, once the last contents 1N00 of the predefined sequence is reached and displayed during the last time period T1N, the next contents is once again the first contents 1100 displayed during the first time period T11, possibly for a given global time period. The given time period is, for example, a day (allowing not to take into account data relating to the date and to take into account only data relating to the time of a day).

The LCD 12 includes at least one Input/Output (or I/O) interface (not represented).

The LCD I/O interface includes means for letting a user experience content information through at least one sense, such as the eyesight, the hearing, the touch, the smell and/or the taste. This last means includes a display 122 for displaying a visible contents, a loudspeaker (not represented) for issuing an audible sound contents, a tactile area (not represented) for issuing a tactile contents that may be felt through a (user) physical touch, an odour distributor for issuing an odour contents that may be smelt and/or a taste distributor for issuing a taste contents that may be tasted by a person.

The LCD 12 is preferentially controlled by a PC 116.

The PC 116 is connected to the LCD 12 through a wire or wireless bi-directional link 115.

The PC 116 delivers and controls information that the LCD 12 provides to its exterior environment possibly while also controlling means of the LCD 12 that transmits the information.

The PC 116 is preferably arranged to let the LCD display 122 display several visible contents, in a successive manner, namely one page with content data at a time, during a predetermined time period followed by at least another page with another content data at another time, during another (or the same) predetermined time period.

For example, the displayed contents is changed every ten seconds or the like. In the present status, the LCD display 122 displays the first contents 1100 during a corresponding first time period T11. Then, the LCD display 122 will display the second contents during a corresponding second time period T12.

Optionally, the PC 116 is arranged to let a loudspeaker (not represented) comprised within the LCD 12 (or connected to the PC 116) issue several audible contents, in a successive manner, namely one sound sequence with contents at a time, during a predetermined time period followed by at least another sound sequence with another contents at another time, during another (or the same) predetermined time period.

The PC 116 comprises at least one microprocessor (not represented), at least one memory (not represented) and at least one I/O interface (not represented).

Instead of incorporating a memory(ies), the PC 116 is connected, through a wire or wireless link 117, to a memory 118.

The memory 118 stores a database including a plurality of contents. Each contents is associated with one corresponding time period, like during a first time period T11, a first contents 1100, ... and, during a last time period T1N, a last contents 1 N00.

As data relating to the contents, it may be any media data, namely picture, audio and/or video data.

The database may also include information relating to a location of the LCD 12, as a location identifier (not represented), a LCD identifier (not represented) and/or an

RFID tag identifier, for example RFID 1, with which the data to be transmitted to the LCD 12 is associated.

The memory 118 may store a URL relating to the server 110.

The memory 118 may store an application(s), at least an Internet browser for connecting, through a communication network 120, such as an Internet network, to the server 110.

The PC 116 is preferably connected, via a bidirectional link 119, through the communication network 120, in an intermittent manner or not, to the server 110. Such a bidirectional link 119 may be wired and/or wireless, like a Bluetooth or a Wifi link.

The PC 116 microprocessor executes the browser and uses the stored URL of the server 110, so as to connect, through the communication network 120, to the server 110.

As application, the memory 118 may also store a media player that allows playing media data, as contents, stored within the database.

The PC 116 microprocessor executes the media player to convert the previously stored media data into sound and/or image information, as converted data. The PC 116 transmits to the LCD 12 the thus converted data to be experienced by a user, via the loudspeaker and/or the LCD display 122, during a corresponding time period T1 N.

The PC 116 may be arranged to provide the server 110 with a part of or all the data relating to the contents to be transmitted, through the LCD 12, to a user. As part of or all the data concerned, it preferably includes the RFID tag identifier, such as RFID 1. As part of or all the data supplied through the LCD 12, it may include all the different content information, from the first contents 1100 to the nth contents 1N00, associated with their respective time periods, T11 to T1N, during which each contents is to be experienced by the user.

According to another embodiment (not represented), instead of an nth time period T1 N during which content data is sent through the LCD 12, a corresponding predetermined starting time (and date) and a corresponding predetermined ending time (and date) are associated with the concerned contents.

The PC 116 may be (also) arranged to receive from the server 110, with a part of or all the data relating to the contents to be transmitted, through the phone 14 (and more exactly, the MMI comprised within or connected to the phone 14, such as the phone display 142 and/or the phone loudspeaker), to the phone user. The database stored within the memory 118 may thus comprise data related to a first contents 1101 up to data related to an nth contents 1 N01 associated with concerned respective time periods (or starting and ending times) and that is supplied by the server 110, via the phone 14, to the user. As part of or all the data supplied from the server 110, it preferably includes the concerned associated LCD identifier (not represented) and/or the RFID tag identifier, such as RFID 1.

The tag 124 is associated with the LCD 12 and is present within one and the same location area, like a taxi/train/subway station, a shopping hall, a building lift, a bus stop, a hotel or an airport hall.

The tag 124 includes an adhesive, some glue or the like, as means for being associated with the LCD 12, provided on a tag 124 housing.

The tag 124 is fixed or attached to the LCD 12, for example stuck at the bottom of the LCD 12.

According to another embodiment (not represented), the tag 124 is fixed or attached to another element (not represented) that is (physically) present in a vicinity of the LCD 12. The access to the element is preferably close to a way taken by a person who is potentially interested in the page contents displayed by the LCD display 122.

The tag 124 includes an antenna (not represented).

The tag 124 may be passive, i.e. the tag 124 is powered up by a radio-electromagnetic field generated by an external entity, such as the phone 14.

The tag 124 stores data including an identifier of the server 110.

The server identifier is preferentially a phone number.

According to another embodiment, the server identifier is a SIP address.

The tag 124 may also store other data, as tag data, such as an identifier relating to an application to be executed within the token 16 and/or the server 110, a LCD identifier, an RFID tag identifier and/or one location information corresponding to a geographical point or area at which the LCD 12 is present.

The tag 124 is arranged to provide a user of an NFC enabled handset, such as the phone 14, by sending a radiofrequency signal that conveys the identifier of the server 110 and possibly other stored data, as tag data.

The tag 124 stores thus fixed or permanent data while the content data experienced by the phone 14 user, through the LCD 12 with which the tag 124 is associated, changes dynamically, i.e. from time to time.

Instead of a phone, it can be a PC, a tablet computer, a desktop, a laptop, and/or a set-top box, as (user) terminal.

The phone 14 is equipped with an NFC chip (not represented) that is connected to an antenna 144, so as to read data stored within the tag 124, when the phone 14 is sufficiently close (up to some tens of centimetre) to the tag 124. The antenna 144 is adapted to receive, through a wireless link 13, a short range radiofrequency signal originating from the tag 124 and including data stored within the tag 124.

The phone 14 includes at least one microprocessor (not represented), at least one memory (not represented) and at least one I/O interface (not represented).

The phone I/O interface also includes a phone display 142, a keyboard 146, a first radio interface connected to a first antenna 144 for exchanging data, through a short range radiofrequency link 13, a second radio interface connected to a second antenna 148 for exchanging data, through a long range radiofrequency link 17, with the mobile radio-communication network 18, and a phone loudspeaker (not represented).

The mobile radio-communication network 18 is connected to the server 110. The phone microprocessor processes data originating from the phone memory.

The phone microprocessor executes the application for communicating with the information communicating server to connect to the server 110, so as to fetch data accessible through one server 110 before storing it and letting it experience by the phone user through the phone display 142 and/or the phone loudspeaker.

The phone 14 is arranged to send to the server 110, thanks to its identifier provided by the tag 124 a Short Message Service (or SMS) and/or a Multimedia

Message Service (or MMS) type message(s), in a preferred embodiment, under control of a smart card 16, as a token (i.e. portable device). The corresponding sent message(s) may include data, such as a LCD identifier, the RFID tag identifier and/or location information originating from either the tag 124 or the card 16.

The phone 14 is also able to receive from the server 110, in response to the sent message, a SMS and/or a MMS type message(s), while cooperating, in a preferred embodiment, with the card 16. The corresponding received message(s) may include data related to the information presently experienced, through the LCD 12, by the phone user. The received data, as further information, related to the information presently experienced, through the LCD 12, by the phone user may be stored within the phone memory before displaying it through the phone display 142.

To provide the user with dynamic information at the phone 14, neither the server identifier that is accessed from the phone 14 nor the tag 124 that stores the server identifier is modified.

As to the card 16, it may be a Universal Integrated Circuit Card (or UICC).

The UICC includes a Subscriber Identity Module (or SIM) application or a corresponding application.

The UICC stores securely an International Mobile Subscriber Identity (or IMSI), as a unique number associated with all GSM and UMTS network mobile phone users. The IMSI is used to identify a subscriber in relation with at least one mobile radio-communication network. The SIM type smart card can be, for example, a SIM smart card for a GSM network, a Universal Subscriber Identity Module (or USIM) for a UMTS network, a Removable User Identity Module (or RUIM), a CDMA Subscriber Identity module (or CSIM) for a CDMA network, and/or an Internet Protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

Instead of a UICC type card, the card 16 may be a (micro) Secure Digital (or SD) type card or a Multi-Media type Card (or MMC).

The card 16 is intended to interact with the phone 14, in order to send, via the mobile radio-communication network 18, through the SMS-C 182, to the server 110, a SMS and/or MMS type message(s).

The card 16 is connected to the phone 14 via a bi-directional link 15.

The card 16 includes a chip comprising at least one microprocessor 162, as means for processing data, at least one memory 164, and at least one I/O interface 166 for communicating with the exterior of the card 16, in particular the phone 14, which are all linked together through a control and data bus 163.

The card memory 164 can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

The card 16 stores, preferably within a non-volatile part of the memory 164, besides a card Operating System (or OS), an application algorithm relating to a process, according to the invention, for sending information, through the phone 14 and the SMS-C 182, one (or several) message(s), such as in particular a SMS and/or MMS type message(s) based upon information, notably the server identifier, originating, through the NFC chip, from the tag 124. The message to be sent by the card 16 includes notably the identifier of the server 110.

Such an application may be written in an object-oriented language, such as Java, also termed applet when developed in Java.

According to such a corresponding embodiment, the card memory 164 stores a Java Virtual Machine (or JVM) that interprets and executes the applet.

The card 16, as secure element, stores preferably security functions.

The security functions may include a user authentication process to be used, in order to access the server 110 to be accessed. To authenticate the user, the card 16 may store an application for verifying a Personal Identity Number (or PIN). The PIN is securely stored by the card 16 and to be input by the card 16 user, so that the card 16 compares the input data with the stored PIN and, when the input data matches the stored PIN, authorizes a running of the application algorithm.

The security functions include preferentially an encryption/decryption process. The encryption/decryption process is to be used for exchanging data, through the phone 14, with the server 110. Before sending any data, the data is encrypted with a key and an encryption algorithm. The algorithms for encrypting/decrypting data are shared between the card 16 and the server 110. The encryption/decryption process is to be used before sending, through the phone 14, to the server 110, data and after receiving, through the phone 14, from the server 110 data respectively, so as to protect an access to the data exchanged between the card 16 and the server 110.

The card memory 164 stores, preferably in a secure manner, the identifier relating to the server 110 to be accessed and that is fetched, through the NFC chip, from the tag 124.

The card microprocessor 162 controls and communicates with all the components of the card chip, such as its memory 164 to read it and preferably write into it. The card microprocessor 162 controls a data exchange, through the I/O interface 166, with outside, notably the phone 14.

The card microprocessor 162 preferentially executes, besides the card OS, the application for sending information, through the phone 14 and the SMS-C 182, one (or several) message(s), such as in particular a SMS and/or MMS type message(s) based upon information originating, through the NFC chip, from the tag 124.

The card I/O interface 166 includes preferably an International Organization for Standardisation (or ISO) 7816 interface, so as to let communicate the card 16 and the phone 14.

According to one particular embodiment, the card I/O interface 166 comprises at least one Application Protocol Data Unit (or APDU) communication channel.

The card I/O interface 166 may comprise another or other communication channel(s), such as an Internet Protocol (or IP) communication channel, a Mass Storage communication channel, and/or a Universal Serial Bus (or USB) communication channel in compliance with the USB standard specifications.

The card I/O interface 166 is used for receiving data from and sending data to outside, namely via at least the phone 14, through the corresponding phone I/O interface and the bi-directional communication link 15.

The communication between the card 16 and the phone 14 is used for benefiting from the NFC reading capability of the phone 14, an access, through the mobile radio-communication network 18 (to which the phone 14 is connected) and in particular the SMS-C 182, to the server 110, and/or a MMI of the phone 14 to let the phone user experience any data downloaded from the server 110.

The SMS-C 182 is a particular intermediary element of the mobile radio-communication network 18 between the card 16 and the server 110 which delivers an SMS type message to a destination entity, such as the server 110 or the card 16.

The SMS-C 182 is used for dating, storing and forwarding a SMS type message to the server 110 when the SMS type message is received from the card 16.

According to an important feature of the invention, the SMS-C 182 assigns or allocates a receipt time value to the SMS type message received from the card 16 and to be forwarded to the server 110 that is identified through its identifier.

According to another embodiment, instead of the SMS-C as entity of the mobile radio-communication network, the phone, as terminal, is arranged to assign or allocate a receipt time value to the SMS type message received from the card 16 and to be forwarded to the server identified thanks to its identifier. Such a phone is arranged to deliver a precise receipt time value by either being equipped with a Coordinated Universal Time (or UTC) recovery mechanism or recovering the UTC, as a reference time.

The SMS-C 182 adds within the contents of the SMS type message received from the card 16, the assigned or allocated receipt time value, as further data. Such a dating or time stamping feature of the SMS-C 182 allows linking, on the one hand, content data that is presently experienced, through the LCD 12, by the user, with, on the other hand, the corresponding further content data to be delivered to the phone user, through the phone MMI.

The SMS-C 182 is connected, through a bi-directional link 19, to the server 110.

The server 110 includes or is connected to a memory 112.

The server 110 accesses, through a bi-directional link 111, the memory 112.

The server 110 is hosted by a computer and is dedicated to running an application for communicating information to be experienced at the phone MMI.

The memory 112 stores a first database 113 including data relating to contents that may be provided, through the server 110, to the phone 14, so as to be presented at least in part to the phone user. More exactly, for each identifiable or identified RFID tag, there is data relating to contents, 1101 ... 1N01, linked with the time, so as to fetch the corresponding contents that is synchronized and thus bound to contents, 1100 ... 1 N00 respectively, that is currently experienced by the user through the LCD 12.

The server 110 is adapted to receive the SMS and/or MMS type message(s), as a request for downloading further information, to retrieve further information and send back to the requester the retrieved information.

To retrieve the concerned contents within the first database 113, the server 110 (and more exactly, a microprocessor, as data processing means (not represented)) has to be able to identify at least the time of a corresponding query. The concerned LCD 12, the concerned RFID tag, and/or the concerned location area may be either identified or identifiable, in order to know which LCD displays the contents that is being experienced by the user. The server 110 uses an incoming message that originates from the card 16, that is forwarded by the SMS-C 182 while dating the message and that addresses the server 110 thanks to its identifier, in order to identify corresponding contents thanks to such a dating.

According to an important feature of the invention, a link between the contents delivered through the LCD 12 and the contents delivered through the phone 14 to the phone user is the time that is informed by the SMS-C 182, as time stamping or dating entity.

The server 110 is arranged to send back to the phone 14 one or several messages including the retrieved contents that is linked to the contents experienced by the phone user. The message may be a SMS and/or MMS type message(s), as a "Push SMS and/or MMS".

The phone user benefits thus from further information in line with the information that she or he is experiencing or has just experienced through the LCD 12. Such a synchronization or quasi-synchronization of information that is supplied to the phone user, on the one hand, through the LCD 12 and, on the other hand, through the card 16 and the phone 14 MMI is convenient for the user and user friendly.

Thus, when contents is, at a given time, experienced by the (phone) user, other contents associated with the experienced contents for the concerned time is to be downloaded, through the card 16, to the phone 14 MMI.

Optionally, the server 110 comprises within its memory 112 a second database 114 including contents that is provided and/or to be provided to a fleet of LCDs comprising the LCD 12. The second database 114 comprises an identifier allowing to identify a concerned location, a concerned LCD, and/or a concerned tag at which the contents is to be delivered through the LCD 12, associated with contents accompanied with corresponding periods of time, during each of which some contents is to be supplied.

When the server 110 receives from the PC 116 a request for being provided with contents to be experienced at the LCD 12 with corresponding periods of time, the server 110 sends back to the PC 116 each contents while accompanying it with a corresponding predetermined period of time during which each contents has to be experienced, as a sequence of content data.

For example, each page constituted by content data to be displayed by the LCD display 122 may be replaced, after a corresponding predetermined period of time, by a replacing page constituted by other content data for another corresponding predetermined period of time.

According to another embodiment (not represented), instead of two separate databases, the first database 113 and the second database 114 constitute one and the same database accessible from the server 110 (more exactly, means for processing data, such as one microprocessor).

According to another embodiment (not represented), instead of two databases accessible from one and the same server 110, the first database 113 and the second database 114 are separated and accessible from two corresponding distinct and separated servers (not represented).

The server 110 is arranged to supply, through the phone 14 MMI, to the phone user further contents that is linked to the contents that is being "played" or given at the LCD 12.

Such further contents that is thus preferably received by the card 16 may provide a link to another entity, like a server, or a person, for example, at a call centre, to obtain relevant information related to the information acquired by the user through the LCD 12.

The server 110 may be arranged to communicate, as further contents, to the card 16 a command for setting-up a phone call from the card 16 to a predetermined voice box or call centre by using, for example, a corresponding phone number or SIP address.

The thus exchanged data between the server 110 and the card 16 may have been previously encrypted, so as to protect access to the contents of the exchanged data.

To encrypt the data, the server 110 and the card 16 share, i.e. store and use, an encryption algorithm and an encryption key, as well as a decryption algorithm and a decryption key.

The server 110 may also be arranged to control information to be transmitted, through the PC 116, to the LCD 12.

The server 110 may be further arranged to generate statistics for each LCD 12, each tag 124, and/or each location that is being used for delivering contents while associating corresponding statistics with the concerned identifier, namely the LCD identifier, the RFID identifier, and/or the location identifier.

Such statistics may allow discovering the most popular location(s) and/or contents among the ones provided through the fleet of LCDs.

Figure 2 depicts an example of a message flow 20 that involves the PC 116, the LCD 12, the card 16, the tag 124, the phone 14, the SMS-C 182 and the server 110.

For example, the system 10 for communicating information allows to provide, through the LCD display 122, the user of the phone 14 with first contents 1100, like an advertisement relating to a particular motorbike, while providing her or him at (almost) the same time, through the phone display 142, with further information, as contents 1101, relating to the displayed advertisement, as another contents associated with the first contents 1100. As further information, it may be a list of the address(es) relating to some motorbike dealer(s) that may be located in the vicinity of a location of the LCD 12.

Firstly, during a configuration phase, the server 110 or another server (not represented) sends to the PC 116 one or several messages 21 including a sequence of content data to be transmitted successively during corresponding respective periods of time by the LCD 12. For example, during a first period of time T11, first contents 1100 is to be sent to the LCD 12, then, once the first period of time has elapsed, during a second period of time T12, second contents 1200 is to be sent to the LCD 12, ...and so on, when the penultimate contents has been delivered, the last contents 1N00 of a possible cycle is to be sent, during a last period of time T1N, to the LCD 12.

The PC 116 sends to the LCD 12 a message 23 including the first contents 1100 during an associated first period of time T11.

The LCD 12 displays, during the first period of time T11, through the LCD display 122, the first contents 1100, such as a first page, that has been possibly previously downloaded up to the LCD 12, through the PC 116, from the server 110.

It is assumed that the phone user is interested in obtaining further information about the advertisement, as the first contents 1100, that is being displayed through the LCD display 122.

To obtain further data, the phone 14 user approaches the phone 14 to the tag 124.

If the tag 124 is passive, then the phone 14 powers the tag 124.

The tag 124 transmits, through the NFC chip, to the card 16 a first message 22 with the identifier of the server 110. The first message 22 may include further data, as tag data, such as an application identifier by which the application is identified and to be executed at the card 16 and/or the server 110, an RFID tag identifier, a LCD location information and/or a LCD identifier.

The receipt by the card 16 of the first message 22, through a short range radiofrequency connection, triggers an execution of the application for sending information, through the phone 14 and the SMS-C 182, one (or several) message(s), such as a SMS type message based upon information, notably the server identifier, originating, through the NFC chip, from the tag 124.

The card 16 sends, at its initiative, to the phone 14, a pro-active type command 24, like "SEND SMS", for requesting the phone 14 to send to the thus identified server 110 a SMS type message including the server identifier to be addressed.

The SMS type message may include further data, like the concerned RFID tag identifier and/or an information item(s) relating to a location of the LCD 12, as parameters of the pro-active type command and tag 124 data.

Once the phone 14 has received and processed the command 24 issued by the card 16, the phone 14 sends to the SMS-C 182 a SMS type message 26 including the identifier of the server to be addressed and possibly further tag 124 data.

Then, the SMS-C 182 dates or time stamps the received SMS type message 26 by allocating this latter a receipt time value.

The SMS-C 182 forwards the received SMS type message 26 to the server 110 by sending it a SMS type message 28 while integrating the allocated receipt time value.

The server 110 receives the SMS type message 28, analyses its contents by retrieving the allocated receipt time value and possibly further tag 124 data, and fetches additional information, namely the associated contents 1101 stored at the server 110 side.

The server 110 sends back, through the SMS-C 182 and the phone 14, to the card 16 that is identified within the received SMS type message 28 a message 210, as response to the received SMS type message 28. The returned message 210 comprises the fetched additional information associated with the first contents 1100, namely the associated contents 1101.

Then, the card 16 sends to the phone 14 a pro-active type command 212, such as "Display text", along with the received associated contents 1101, so as to let the phone user experience it by viewing and/or listening to it.

The PC 116 sends to the LCD 12 a message (not represented) including the second contents 1200 during an associated second period of time T12.

Thus, at a given time, the phone user experiences, on the one hand, through the LCD display, a piece of information, and, on the other hand, through the phone display 142, a complementary piece of information.

The proposed solution operates in a quick time since a response at the phone' side is obtained just after tapping on the tag 124 to get more information.

The proposed solution is appropriate not only for static (displayed) contents but also for dynamic contents (that is changed with the time at the LCD 12' side).

Furthermore, the proposed solution is easy to implement and quick since the server 110 shares with the phone 14 user an up-to-date information that is stored at the server side.

## Claims

1. A method (20) for communicating information,
**characterized in that**, a server (110) having a predetermined identifier, as server identifier, a communicating device (124) storing the server identifier, the communicating device being associated with an information transmitting medium (12), the method comprises the following steps:
- the information transmitting medium sends successively at least one predetermined information item (1100..1 N00);
- a terminal (14) receives from the communicating device the server identifier;
- the terminal sends, via a mobile radio-communication network (18), to the server, a message (26) comprising the server identifier;
- a mobile radio-communication network element (182) comprised within the mobile radio-communication network receives the message and allocates a receipt time to the message;
- the mobile radio-communication network element sends to the server a message (28) comprising the server identifier and the allocated receipt time;
- the server retrieves at least one predetermined information item (1101) linked to the information item sent at the receipt time; and
- the server sends to the terminal at least one message (210) comprising the retrieved information item (1101).

2. Method according to claim 1, wherein the message comprising the server identifier includes a Short Message Service type message and/or a Multimedia Message Service type message.

3. Method according to claim 1 or 2, wherein the at least one message comprising the retrieved information item includes a Short Message Service type message and/or a Multimedia Message Service type message.

4. Method according to any of the claims 1 to 3, wherein, the communicating device storing predetermined data, as communicating device data, the terminal further receives from the communicating device the communicating device data, the terminal sends, via the mobile radio-communication network, to the server, a message comprising the communicating device data, and the mobile radio-communication network element sends to the server the message further comprising the communicating device data.

5. Method according to claim 4, wherein the communicating device data comprises at least one element of a group comprising:
- a communicating device identifier;
- information relating to a location of the information transmitting medium.

6. Method according to any of the claims 1 to 5, wherein, the terminal, said first terminal, receiving from the communicating device the server identifier, the information transmitting medium being connected to a second terminal (116), the second terminal sends to the information transmitting medium the at least one predetermined information item to be sent successively.

7. Method according to claim 6, wherein the server sends to the second terminal a message comprising the at least one predetermined information item to be sent successively accompanied with a corresponding starting time and a corresponding ending time for each of the at least one predetermined information item; and/or wherein the second terminal sends to the server a message comprising the at least one predetermined information item to be sent successively accompanied with a corresponding starting time and a corresponding ending time for each of the at least one predetermined information item.

8. Method according to any of the claims 1 to 7, wherein the communicating device is a contact-less communicating device and is attached to the information transmitting medium, and
wherein the terminal, as first terminal, is a Near Field Communication enabled mobile handset.

9. A server (110) for communicating information,
**characterized in that**, at least one information item (1100...1 N00) being sent successively by an information transmitting medium (12), the server having a predetermined identifier, as server identifier, the server is adapted to:
- receive a message (28) comprising the server identifier and a receipt time;
- retrieve at least one predetermined information item (1101) linked to the information item sent at the receipt time; and
- send at least one message comprising the retrieved information item (1101).

10. A system (10) for communicating information,
**characterized in that** the system comprises :
- a communicating device (124) comprising means for storing a server identifier, the communicating device comprising means for being associated with an information transmitting medium (12),
- the information transmitting medium comprising means for sending successively at least one predetermined information item (1100... 1N00);
- a terminal (14), the terminal comprising means for receiving from the communicating device the server identifier, the terminal comprising means for sending, via a mobile radio-communication network (18), to the server, a message (26) comprising the server identifier;
- a mobile radio-communication network element (182) comprised within the mobile radio-communication network, the mobile radio-communication network element comprising means for receiving the message, means for allocating a receipt time to the message, and means for sending to the server a message (28) comprising the server identifier and the allocated receipt time;
- a server (110) having a predetermined identifier, as server identifier, the server comprising means for retrieving at least one predetermined information item (1101) linked to the information item (1100) sent at the receipt time and means for sending to the terminal at least one message (210) comprising the retrieved information item.
